# EUROPÄISCHE PATENTSCHRIFT

(11) **EP 4 222 318 B1**
(45) Veröffentlichungstag und Bekanntmachung des Hinweises auf die Patenterteilung: **06.11.2024**
(21) Anmeldenummer: 21773555.4
(22) Anmeldetag: 07.09.2021
(51) Int. Cl.: E02B 17/02, E02B 17/00, F03D 13/25, E02D 15/08, E02D 27/42, E02D 27/50, E02D 27/52

(54) **GRÜNDUNG FÜR EIN OFFSHORE-BAUWERK**
FOUNDATION FOR AN OFFSHORE STRUCTURE
FONDATION DESTINÉE À UNE STRUCTURE EN MER

(30) Priorität: 02.10.2020 DE 102020125842
(43) Veröffentlichungstag der Anmeldung: 09.08.2023
(73) Patentinhaber: Bartminn, Daniel, 25335 Elmshorn (DE)
(72) Erfinder: CZARNECKI, Artur, 22301 Hamburg (DE); BARTMINN, Daniel, 25335 Elmshorn (DE)
(74) Vertreter: Lippert Stachow Patentanwälte Rechtsanwälte Part.mbB
(86) Internationale Anmeldenummer: PCT/EP2021/074593
(87) Internationale Veröffentlichungsnummer: WO 2022/069167

(56) Entgegenhaltungen:
- CN-A- 111 636 467
- KR-B1- 101 281 601
- KR-B1- 101 403 455

## Beschreibung

Die Anmeldung betrifft eine Gründung für ein Offshore-Bauwerk, insbesondere für ein Offshore-Windkraftbauwerk, umfassend mindestens eine turmförmige Gründungstruktur mit einer sich in Längsrichtung (bzw. axialer Richtung) erstreckenden, umlaufenden Gründungswandung, wobei die Gründungswandung unterseitig mit einer unterseitigen Stirnfläche begrenzt ist, wobei die Gründungswandung aus einem mineralischen Baustoff gebildet ist. Darüber hinaus betrifft die Anmeldung ein Offshore-Bauwerk, ein Verfahren zur Herstellung einer Gründung und eine Verwendung.

Vermehrt werden Offshore-Bauwerke errichtet, insbesondere auf dem Meer. So werden zur elektrischen Energieerzeugung bzw. zur Bereitstellung elektrischer Energie aus sogenannten erneuerbaren Energiequellen beispielsweise Offshore-Windparks mit einer Vielzahl von Offshore-Windenergiebauwerken installiert. Offshore-Standorte zeichnen sich üblicherweise durch relativ kontinuierliche Windbedingungen und hohe durchschnittliche Windgeschwindigkeiten aus, so dass vermehrt so genannte Offshore-Windparks errichtet werden.

In der Regel weist ein Offshore-Windpark eine Vielzahl an Offshore-Windenergiebauwerken auf, wie eine Vielzahl von Offshore-Windkraftanlagen, gegebenenfalls einen Messmast und/oder eine Offshore-Umspannstation. Über die Offshore-Umspannstation kann der Offshore-Windpark elektrisch beispielsweise mit einer Onshore-Umspannstation oder einer weiteren Offshore-Umspannstation bzw. Offshore-Konverterstation verbunden sein. Eine Onshore-Umspannstation wiederum kann mit einem öffentlichen Stromnetz verbunden sein.

Eine Offshore-Windkraftanlage ist zum Wandeln der kinetischen Windenergie in elektrische Energie eingerichtet. Zum Übertragen der erzeugten elektrischen Energie zwischen zwei Offshore-Windenergiebauwerken oder einem Offshore-Windenergiebauwerk und einem Onshore-Bauwerk werden Energiekabel in Form von Seekabeln verlegt.

Bei Offshore-Windenergiebauwerken, aber auch bei anderen Offshore-Bauwerken (z.B. Plattformen zur Exploration von Gas und/oder Öl), ist es üblich, ein Offshore-Bauwerk durch eine Gründung (z.B. Monopile-, Tripod-, Tripile- oder Jacket-Gründungen) auf bzw. in dem Unterwasserbaugrund bzw. Unterwasserboden, insbesondere einem Meeresboden, direkt zu verankern bzw. zu gründen.

Eine Gründung verfügt in der Regel über eine turmförmige, insbesondere zylinderförmige, Gründungsstruktur, bevorzugt in Form eines Hohlstrukturelements. Eine turmförmige Gründungstruktur weist in der Regel eine sich in Längsrichtung bzw. axialer Richtung erstreckende, umlaufende Gründungswandung auf, wobei die Gründungswandung unterseitig mit einer unterseitigen Stirnfläche begrenzt ist.

In der Praxis werden bisher üblicherweise turmförmige Gründungsstrukturen aus dem metallischen Material bzw. Werkstoff Stahl, hergestellt. Stahl eignet sich insbesondere aufgrund seiner Festigkeits- und Steifigkeitseigenschaften besonders gut für eine derartige Gründungsstruktur.

Es wurde festgestellt, dass eine Herstellung einer Gründungswandung einer turmförmigen Gründungsstruktur aus einem mineralischen Baustoff (z.B. Beton) ein großes Kosteneinsparpotential im Vergleich zu einer (reinen) Stahlstruktur besitzt. Um eine ausreichende Festigkeit bereitzustellen, ist es jedoch erforderlich, die Wandstärke bzw. Wanddicke der Gründungswandung bei einer Gründungswandung aus einem mineralischen Baustoff im Vergleich zu einer Hohlstruktur aus Stahl signifikant zu erhöhen.

Eine erhöhte Wandstärke führt jedoch zu Problemen bei einer Installation (z.B. durch Einspülen oder Einrammen) einer derartigen Gründungsstruktur in den

Unterwasserbaugrund. So erhöht sich durch die größere Wandstärke insbesondere der Widerstand während der Einbringung in den Unterwasserboden. Hierdurch erhöhen sich der Installationsaufwand und in entsprechender Weise die Installationskosten, insbesondere infolge der zwangsläufigen Erfordernis wesentlich größerer Installationsgerätschaften.

Eine gattungsgemäße Gründung ist aus der CN 111 636 467 A bekannt. Weiterer Stand der Technik ist in den Veröffentlichungen KR 101 403 455 B1 und KR 101 281 601 B1 beschrieben.

Daher liegt der Anmeldung die Aufgabe zugrunde, eine Gründung für ein Offshore-Bauwerk bereitzustellen, bei dem die oben genannten Nachteile zumindest reduziert sind und insbesondere der Installationsvorgang einer aus einem mineralischen Baustoff gebildeten turmförmigen Gründungsstruktur vereinfacht ist.

Die Aufgabe wird gemäß einem ersten Aspekt der Anmeldung gelöst durch eine Gründung für ein Offshore-Bauwerk, insbesondere für ein Offshore-Windkraftbauwerk, nach Anspruch 1. Die Gründung umfasst mindestens eine turmförmige Gründungstruktur mit einer sich in Längsrichtung erstreckenden, umlaufenden Gründungswandung. Die Gründungswandung ist unterseitig mit einer unterseitigen Stirnfläche begrenzt. Die Gründungswandung ist aus einem mineralischen Baustoff (aus)gebildet. Die Gründung umfasst mindestens ein aus einem metallischen Material gebildetes und an der unterseitigen Stirnfläche angeordnetes Einbindeelement, wobei die Länge des Einbindeelements von der unterseitigen Stirnfläche bis zu einem unteren Ende des Einbindeelements zumindest 0,5 m beträgt.

Indem im Gegensatz zum Stand der Technik anmeldungsgemäß eine Gründung mit einer durch eine umlaufende Gründungswandung gebildeten turmförmigen Gründungsstruktur bereitgestellt wird, bei der an der unterseitigen Stirnfläche ein aus einem metallischen Werkstoff bzw. Material gebildetes Einbindeelement mit einer Länge von zumindest 0,5 m angeordnet ist, insbesondere befestigt ist, werden die Nachteile des Stands der Technik zumindest reduziert und insbesondere der Installationsvorgang einer aus einem mineralischen Baustoff gebildeten turmförmigen Gründungsstruktur vereinfacht. Insbesondere kann der Widerstand der turmförmigen Gründungsstruktur durch das metallische Einbindeelement bei dem Installationsvorgang reduziert werden. Die Verdrängung von Bodenmaterial beim Einbringvorgang wird durch das metallische Einbindeelement unterstützt, insbesondere begünstigt, so dass insbesondere der Installationsaufwand und in entsprechender Weise die Installationskosten reduziert werden können.

Die anmeldungsgemäße Gründung ist insbesondere Teil eines Offshore-Bauwerks und dient vorzugsweise dem Tragen einer Offshore-Einrichtung des Offshore-Bauwerks. Ein Offshore-Bauwerk ist vorzugsweise ein Offshore-Windenkraftbauwerk, wie eine Offshore-Windkraftanlage, ein Offshore-Messmast oder eine Offshore-Umspannstation. Ferner kann ein Offshore-Bauwerk eine Bohr- oder Förderplattform oder eine andere Offshore-Plattform sein, vorzugsweise eingerichtet zur Gewinnung, Umwandlung und/oder Speicherung von Energie, wie z.B. eine Offshore-Anlage zur Produktion von Wasserstoff.

Wie bereits beschrieben wurde, kann ein Offshore-Bauwerk eine Offshore-Einrichtung umfassen, die durch die Gründung in einem Unterwasserboden bzw. -baugrund, insbesondere ein Meeresboden, befestigt sein kann. Ein Offshore-Bauwerk kann insbesondere durch die Offshore-Einrichtung (z.B. eine Plattform, eine Gondel, Turm, Generator, Rotor, Umspannvorrichtung und/oder dergleichen) und die mindesten eine Gründung gebildet sein.

Die anmeldungsgemäße Gründung umfasst eine turmförmige Gründungsstruktur, vorzugsweise in Form eines zylinderförmigen Hohlstrukturelements. Das zylinderförmige Hohlstrukturelement kann insbesondere ein Hohlpfahl sein. Die turmförmige Gründungsstruktur weist eine sich in Längsrichtung bzw. axialer Richtung der turmförmige Gründungsstruktur erstreckende, umlaufende Gründungswandung auf. Insbesondere kann die turmförmige Gründungsstruktur eine kreisförmige Querschnittsfläche aufweisen. Bei anderen Varianten der Anmeldung kann auch eine andere Querschnittsfläche vorgesehen sein, wie eine ovalförmige. Weiterhin umfasst die Anmeldung aufgelöste Strukturen, bestehend aus mehreren in den Boden einbindenden Elementen, wie Jackets, Tripods und Tri-piles

Die Gründungswandung kann zwei distale Enden aufweisen, die jeweils durch Stirnflächen begrenzt sind. Eine erste Stirnfläche kann eine oberseitige Stirnfläche sein und eine zweite Stirnfläche kann eine unterseitige Stirnfläche sein. Ober- und Unterseite können durch die Position des Hohlstrukturelements im finalen Installationszustand definiert sein. Dabei ist im Installationszustand die untere Stirnfläche im Unterwasserboden angeordnet, insbesondere gegründet, die obere Stirnfläche kann insbesondere zumindest aus dem Unterwasserboden herausragen, vorzugsweise aus der Wasserlinie.

Eine Gründungswandung ist insbesondere begrenzt durch eine Innenwand und eine Außenwand bzw. durch einen Innendurchmesser und einen Außendurchmesser. Die Gründungswandung ist die äußere Begrenzung der turmförmigen Gründungsstruktur. Die Gründungswandung ist insbesondere rohrförmig. Wie bereits beschrieben wurde, kann die Gründungswandung in einem Querschnitt insbesondere rund, elliptisch oder oval sein.

Gemäß einer Ausführungsform wird vorgeschlagen, dass die turmförmige Gründungsstruktur hohlzylindrisch ist. Durch die zylindrische Form kann die strukturelle Integrität erhöht werden, so dass das Hohlstrukturelement höhere Biegemomente aufnehmen kann.

Die anmeldungsgemäße Gründungswandung ist aus einem mineralischen Baustoff gebildet bzw. hergestellt. Gemäß einer Ausführungsform der anmeldungsgemäßen Gründung kann der mineralische Baustoff zumindest in Teilen Zement enthalten. Der mineralische Baustoff ist vorzugsweise Beton, der aus Zement, Kies, Sand und Wasser angemischt ist und insbesondere nach dem Vergießen ausgehärtet ist.

Anmeldungsgemäß ist erkannt worden, dass ein an der unterseitigen Stirnfläche angeordnetes metallisches Einbindeelement, insbesondere in Form eines Metallschuhs, den Widerstand beim Einbringen der Gründungstruktur reduziert. Durch das metallische Einbindeelement wird insbesondere das Verdrängen des Bodenmaterials bei dem Einbringvorgang erleichtert.

Ein metallisches Einbindeelement weist den Vorteil einer höheren Festigkeit (verglichen mit einem aus einem mineralischen Baustoff hergestellten Element) auf, so dass das metallische Einbindeelement (welches in einem Installationszustand vorzugsweise vollständig im Unterwasserboden eingebunden ist) eine geringere Einbindewandstärke aufweisen kann als eine Wandstärke der Gründungswandung.

Insbesondere meint ein metallisches Einbindeelement vorliegend, dass das Einbindeelement keinen mineralischen Baustoff enthält. Insbesondere kann das Einbindeelement ausschließlich aus einem metallischen Material gebildet sein. Besonders bevorzugt kann das metallische Material (ausschließlich) Stahl sein.

Es versteht sich, dass bei Varianten der Anmeldung an dem metallischen Einbindeelement (insbesondere am unteren Ende) auch ein mineralischer Baustoff (z.B. als Transportschutz) angebracht sein kann, wobei insbesondere eine zumindest teilweise Beschädigung des mineralischen Baustoffs vor oder während des Einbringvorgangs erlaubt ist.

Das metallische Einbindeelement kann sich bezüglich der unterseitigen Stirnfläche des metallischen Elementes zumindest in einem Abschnitt befinden, der sich nicht weiter als 3m von der unterseitigen Stirnfläche der Gründung befindet.

Für eine gute Tragfähigkeit hat sich herausgestellt, dass der Wasser-Zement-Wert (w/z) des mineralischen Baustoffs kleiner als 0,45, insbesondere kleiner als 0,35 und insbesondere bevorzugt kleiner als 0,3 sein kann.

Die insbesondere bei Windkraftanlagen auftretenden Momente und Scherkräfte können durch die turmförmige Gründungsstruktur insbesondere dann ausreichend aufgenommen werden, wenn der mineralische Baustoff eine Festigkeitsklasse von zumindest C40/50, bevorzugt C70/85, insbesondere bevorzugt C100/115 nach EN 206 und EN1992 aufweist.

Eine über die Lebensdauer eines Offshore-Bauwerks, insbesondere einer Offshore-Windkraftanlage, ausreichende Langzeitstabilität der turmförmigen Gründungsstruktur, insbesondere bei dauerhafter Penetration durch Wasser, kann insbesondere dadurch erreicht werden, dass der mineralische Baustoff einen Porengehalt (Luftporen) von weniger als 5 %, bevorzugt weniger als 3 %, insbesondere weniger als 2 % aufweist. Die Gesamtporosität gemessen mit Quecksilberdruckporosität sollte nach 28 Tagen P_{28d} < 12 Vol-% und nach 90 Tagen P_{90d} < 10 Vol-% sein.

Insbesondere bei einer dauerhaften Penetration von Wasser bei einer Installation der Gründungsstruktur kann eine ausreichende Lebensdauer dadurch erreicht werden, dass der mineralische Baustoff bei einer quecksilberdruckporosimetrischen Messung eine Porosität von P_{28d} < 12 Vol-% aufweist, wie bereits beschrieben wurde. P_{28d} ist eine Messung über 28 Tage. Die Porosität ist dabei bevorzugt auch kleiner als 10 Vol.-%. Bei P_{90d}, das heißt bei einer Messung über 90 Tage, ist die Porosität bevorzugt < 10 Vol.-%, insbesondere < 8 Vol.-%.

Eine ausreichende Tragfähigkeit der Gründungsstruktur kann insbesondere dadurch erreicht werden, dass der mineralische Baustoff einen Zementgehalt von zumindest 350 kg/m³, bevorzugt zumindest 450 kg/m³, insbesondere bevorzugt zumindest 650 kg/m³ aufweist.

Ferner kann die Gründungswandung mechanisch vorgespannt sein. Durch die Vorspannung können Risse überdrückt und somit die Oberflächen weitestgehend frei von Zugspannung gehalten werden, Dies ist insbesondere bei schwankenden Drehmomentbelastungen vorteilhaft. Die Vorspannkraft ist dabei bevorzugt 5 %, insbesondere mehr als 15 % größer als die Druckfestigkeit der Gründungswandung. Die Vorspannkraft wird vorzugsweise in Längsrichtung aufgebracht.

Für eine noch höhere Stabilität, insbesondere bei dynamischen Umgebungsbedingungen, kann, gemäß einer weiteren Ausführungsform, der mineralische Baustoff (metallisch) armiert sein. Die metallische Armierung ist insbesondere eine Stahlarmierung. Die Armierung kann durch Fasern oder Armiereisen gegeben sein. Eine Faserarmierung kann auch durch Kohlefaser, Glasfaser oder Metallfaser erreicht werden.

Die Armierung kann so gebildet sein, dass diese bei 90 % der Messstellen, bevorzugt bei 98 % der Messstellen, zumindest als 26 mm, bevorzugt zumindest als 40 mm Betondeckung aufweist.

Der mineralische Baustoff kann mit ferritisch nichtrostendem Betonstahl armiert sein. Die Armierung kann einen Chromgehalt von 18 M% nicht überschreiten. Die Armierung kann Molybdänbestandteile aufweisen.

Der mineralische Baustoff kann mit austenitisch nichtrostendem Betonstahl armiert sein. Die Armierung kann zumindest 5 M% aufweisen, insbesondere zwischen 5 M% bis 14 M% Nickel und/oder zwischen 12 M% bis 22 M%, insbesondere 15 M% bis 20 M% Chrom.

Der mineralische Baustoff kann mit ferritisch-austenitisch nichtrostendem Betonstahl armiert sein. Die Armierung kann zumindest 18 M%, insbesondere zwischen 15 M% - 20 M% Chrom und 2 M% - 8 M% Nickel und optional Molybdän aufweisen.

Für eine erhöhte Standfestigkeit wird gemäß einer weiteren Ausführungsform vorgeschlagen, dass der mineralische Baustoff versiegelt sein kann, insbesondere mit einer Dichtungsfolie. Eine solche Dichtungsfolie kann beispielsweise eine Aluminium-Butyl-Dichtfolie sein.

Die turmförmige Gründungsstruktur hat bevorzugt eine Einbindelänge von zumindest 7 m. Diese kann ausreichend sein, um die turmförmige Gründungsstruktur ausreichend im Erdboden zu gründen. Bindelängen zwischen 7 m und 20 m sind bevorzugt.

Gemäß einer bevorzugten Ausführungsform der anmeldungsgemäßen Gründung kann die Länge des Einbindeelements von der unterseitigen Stirnfläche bis zu einem unteren Ende des Einbindeelements zwischen 1 m und 9 m liegen. Es ist festgestellt worden, dass ein Einbindeelement mit einer derartigen Länge das Verdrängen des Unterwasserbodenmaterials signifikant erleichtert und insbesondere optimal unterstützt. Die gewählte Länge kann insbesondere von dem Durmesser der turmförmigen Gründungsstruktur und/oder den Bodeneigenschaften an dem Installationsort abhängen. Insbesondere kann die Länge umso mehr erhöht werden, desto schwieriger (insbesondere fester) die Bodenverhältnisse sind.

Wie bereits beschrieben wurde, kann die Gründungswandung oberseitig mit einer oberseitigen Stirnfläche begrenzt sein. Gemäß einer weiteren Ausführungsform kann eine Wandstärke der Gründungswandung von der oberseitigen Stirnfläche bis hin zu der unterseitigen Stirnfläche im Wesentlichen gleichbleibend bzw. konstant sein. Anders ausgedrückt bleibt die Wandstärke über die gesamte Länge der Gründungswandung bevorzugt gleich, ändert sich im Verlauf also insbesondere nicht.

Bei anderen Varianten der Anmeldung kann sich die Wandstärke der Gründungswandung auch verändern, beispielsweise von der oberseitigen Stirnfläche hin zu der unterseitigen Stirnfläche (stetig oder stufig) verjüngen, wobei sich insbesondere durch die Verjüngung der Innendurchmesser der turmförmigen Gründungstruktur, insbesondere ein Hohlstrukturelement, vergrößert und/oder sich durch die Verjüngung der Außendurchmesser der turmförmigen Gründungstruktur, insbesondere ein Hohlstrukturelement, verkleinert.

Grundsätzlich kann das mindestens eine Einbindeelement eine beliebige Form haben. Denkbar ist beispielsweise die Anordnung einer Mehrzahl von stiftförmigen metallischen Elementen an der unterseitigen Stirnseite, die nebeneinander angeordnet sein können.

Bei der Gründung gemäß der Erfindung umfasst das Einbindeelement eine sich in Längsrichtung (bzw. axialer Richtung) erstreckende, umlaufende Einbindewandung. Die Einbindewandung kann vorzugsweise vollständig aus Stahl gebildet sein. Die Querschnittsform entspricht der Querschnittsform der Gründungswandung. (es versteht sich, dass sich die Flächengrößen unterscheiden können). Ein Einbindeelement in Form einer umlaufenden Einbindewandung hat sich für die Verdrängung von Bodenmaterial als besonders vorteilhaft erwiesen.

Gemäß einer weiteren Ausführungsform der anmeldungsgemäßen Gründung kann eine Wandstärke der Gründungswandung zumindest größer sein als eine Wandstärke der Einbindewandung. Wie bereits beschrieben wurde, kann aufgrund der Verwendung von Metall, insbesondere Stahl, die Wandstärke zumindest an einem Wandungsabschnitt der Einbindewandung (verglichen mit der Wandstärke der Gründungswandung, insbesondere im Bereich der unterseitigen Stirnfläche) reduziert sein. Dies verbessert ein Verdrängen des Bodenmaterials noch weiter.

Gemäß einer weiteren Ausführungsform der anmeldungsgemäßen Gründung kann die Wandstärke der Gründungswandung zwischen 100 mm und 900 mm liegen, vorzugsweise zwischen 125mm und 450mm. Die Wandstärke der Einbindewandung (insbesondere des nachfolgend näher beschriebenen Verbindungsabschnitts) kann zwischen 10 mm und 100 mm liegen, vorzugsweise zwischen 30 mm und 80 mm.

Vorzugsweise kann die Wandstärke der Gründungswandung 1,5-mal bis 40-mal größer sein als die Wandstärke der Einbindewandung (insbesondere des nachfolgend näher beschriebenen Verbindungsabschnitts).

Gemäß einer Ausführungsform der anmeldungsgemäßen Gründung kann das Einbindeelement oder ein Teil des Einbindeelements in Verbundbauweise gebildet sein, vorzugsweise aus Metall, besonders bevorzugt aus Stahl, und einem mineralischen Baustoff (z.B. der oben beschriebene Baustofft), wobei zumindest in einem Abschnitt die Querschnittsfläche des Stahls mindestens 12% der Bruttoquerschnittsfläche betragen kann.

Gemäß einer besonders bevorzugten Ausführungsform der anmeldungsgemäßen Gründung kann die Einbindewandung, in Längsrichtung gesehen, einen freien Endabschnitt (umfassend das untere Ende des Einbindeelements), einen (ein-) gebundenen Endabschnitt und einen den freien Endabschnitt mit den gebundenen Endabschnitt verbindenden Verbindungsabschnitt umfassen. Der gebundene Endabschnitt kann in der Gründungswandung eingebunden sein. Dies meint insbesondere, dass sich der gebundene Endabschnitt in die Gründungswandung erstreckt und insbesondere durch den mineralischen Baustoff umgeben ist.

Vorzugsweise kann eine stirnseitige Bohrung und eine Dübelverankerung verwendet werden, um den gebundenen Endabschnitt in der Gründungswandung zu verankern.

Der aus der unterseitigen Stirnfläche unmittelbar herausragende Abschnitt der Einbindewandung wird als Verbindungsabschnitt bezeichnet, der am unteren Ende in den freien Endabschnitt übergeht. Vorzugsweise können die Einbindewandung und damit die genannten Abschnitte einstückig gebildet sein.

Gemäß einer bevorzugten Ausführungsform der anmeldungsgemäßen Gründung kann eine Wandstärke des Verbindungsabschnitts von dem gebundenen Endabschnitt zu dem freien Endabschnitt (also insbesondere über die gesamte Länge des Verbindungsabschnitts) gleichbleibend sein, sich also im Wesentlichen nicht ändern. Der Verbindungsabschnitt kann eine Länge zwischen 0,2 m und 6,5 m haben.

Vorzugsweise kann sich die Wandstärke der Einbindewandung in Längsrichtung ändern. Insbesondere kann das untere Ende am freien Endabschnitt spitzförmig zulaufen, um das Verdrängen des Bodenmaterials noch weiter zu vereinfachen.

Gemäß einer weiteren Ausführungsform der anmeldungsgemäßen Gründung kann eine Wandstärke des freien Endabschnitts sich von einer Wandstärke des Verbindungsabschnitts (die insbesondere gleichbleibend sein kann) unterscheiden. Insbesondere kann sich die Wandstärke des freien Endabschnitts von dem Verbindungsabschnitt zu dem unteren Ende des freien Endabschnitts (also insbesondere über die gesamte Länge des freien Endabschnitts) (stetig oder stufenförmig) verjüngen. Vorzugsweise kann der freie Endabschnitt eine Keilform aufweisen. Die Keilform umfasst insbesondere auch gerundete Ausführungen der Keilspitze.

Alternativ kann eine Wandstärke des freien Endabschnitts größer sein als die Wandstärke des Verbindungsabschnitts. Anders ausgedrückt, kann sich die Wandstärke im Vergleich zum Verbindungsabschnitt aufweiten bzw. vergrößern. Der Vorteil eines derartigen Einbindeelements ist insbesondere, dass die Mantelreibung an der Außenwand der Gründungswandung während der Einbringung reduziert werden kann. Dies erleichtert den Installationsvorgang noch weiter.

Bei einer Ausführungsform kann der freie Endabschnitt in zwei Subabschnitte unterteilt werden. Bei einem ersten sich an den Verbindungsabschnitt (unmittelbar) anschließenden Subabschnitt kann die Wandstärke im Vergleich zum Verbindungsabschnitt vergrößert sein. Bei einem zweiten sich an den ersten Subabschnitt (unmittelbar) anschließenden Subabschnitt kann sich die Wandstärke (vorzugsweise stetig) verjüngen.

Gemäß einer weiteren Ausführungsform der anmeldungsgemäßen Gründung kann ein Innendurchmesser des Verbindungsabschnitts (mit insbesondere gleichbleibender Wandstärke, wie beschrieben) im Wesentlichen einem Innendurchmesser der turmförmigen Gründungstruktur (insbesondere im Bereich der unterseitigen Stirnfläche) entsprechen. Anders ausgedrückt, können die jeweiligen Innenseiten/- wände der Wandungen im Wesentlichen in einer Linie liegen bzw. entsprechend ausgerichtet sein.

Insbesondere alternativ kann ein Außendurchmesser des Verbindungsabschnitts (mit insbesondere gleichbleibender Wandstärke, wie beschrieben) im Wesentlichen einem Außendurchmesser der turmförmigen Gründungstruktur (insbesondere im Bereich der unterseitigen Stirnfläche) entsprechen. Anders ausgedrückt, können die jeweiligen Außenseiten/-wände der Wandungen im Wesentlichen in einer Linie liegen bzw. entsprechend ausgerichtet sein.

Gemäß einer weiteren Ausführungsform der anmeldungsgemäßen Gründung kann ein Innendurchmesser des freien Endabschnitts von dem Verbindungsabschnitt (mit insbesondere gleichbleibender Wandstärke, wie beschrieben) zu dem unteren Ende des freien Endabschnitts im Wesentlichen gleichbleibend sein. Anders ausgedrückt, können die jeweiligen Außenseiten/-wände der genannten Abschnitte im Wesentlichen in einer Linie liegen bzw. entsprechend ausgerichtet sein. Ein Außendurchmesser des freien Endabschnitts (bei einer Ausführungsform nur der zweite Subabschnitt) kann sich von dem Verbindungsabschnitts zu dem unteren Ende des freien Endabschnitts (vorzugsweise stetig, aber auch stufenförmig) verjüngen.

Alternativ kann ein Außendurchmesser des freien Endabschnitts von dem Verbindungsabschnitt (mit insbesondere gleichbleibender Wandstärke, wie beschrieben) zu dem unteren Ende des freien Endabschnitts im Wesentlichen gleichbleibend sein. Anders ausgedrückt, können die jeweiligen Außenseiten/-wände der genannten Abschnitte im Wesentlichen in einer Linie liegen bzw. entsprechend ausgerichtet sein. Ein Innendurchmesser des freien Endabschnitts kann sich von dem Verbindungsabschnitt zu dem unteren Ende des freien Endabschnitts (vorzugsweise stetig, aber auch stufenförmig) verjüngen.

Gemäß einer weiteren bevorzugten Ausführungsform der anmeldungsgemäßen Gründung kann als mineralischer Baustoff in einem Einbindebereich der turmförmigen Gründungsstruktur, in dem ein Ende des Einbindeelements (insbesondere der beschriebene eingebundene Endabschnitt) in der turmförmigen Gründungsstruktur eingebunden ist, ein mineralischer Baustoff mit einer Druckfestigkeit von über 120 N/mm² und/oder einem w/z-Wertvon zumindest kleiner als 0,35 eingesetzt sein. Anders ausgedrückt, kann in dem Bereich, in dem sich der gebundene Endabschnitt in der Gründungswandung erstreckt, ein ultrahochfester Beton (UHFB; auch als Ultra High Performance Concrete bezeichnet) als mineralischer Baustoff verwendet werden. Hierdurch kann eine ausreichende Festigkeit insbesondere in dem Verbindungsbereich zwischen der Gründungswandung und dem Einbindeelement bereitgestellt werden. Insbesondere kann ein mineralischer Baustoff mit einer Dehngrenze (Fließgrenze) zwischen 120 und 200 MPA, vorzugsweise zwischen 140 und 200 MPA (bei einer 0,2% Dehngrenze) verwendet werden.

Ein weiterer Aspekt der Anmeldung ist ein Offshore-Bauwerk, insbesondere ein Offshore-Windkraftbauwerk. Das Offshore-Bauwerk umfasst mindestens eine zuvor beschriebene Gründung. Das Offshore-Bauwerk umfasst mindestens eine durch die Gründung getragene Offshore-Einrichtung.

Ein weiterer Aspekt ist ein Verfahren zur Herstellung bzw. zum Herstellen einer zuvor beschriebenen Gründung, umfassend:
- on-shore Bereitstellen einer Schalung, wobei ein Ringspalt in der Schalung von einem ersten, oberen Ende der Schalung hin zu einem zweiten, unteren Ende der Schalung insbesondere gleichbleibt,
- Vergießen der Schalung mit einem flüssigen Beton, und
- Aushärten des Betons, derart, dass der ausgehärtete Beton eine turmförmige Gründungsstruktur bildet,
- Befestigen eines aus einem metallischen Material gebildeten Einbindeelements an der unterseitigen Stirnseite der ausgehärteten turmförmigen Gründungsstruktur.

Bei anderen Varianten kann das Befestigen ein Einsetzen eines gebundenen Endabschnitts eines aus einem metallischen Material gebildeten Einbindeelements in den Ringspalt an dem unteren Ende der Schale umfassen.

Vorzugsweise kann, gemäß einer bevorzugten Ausführungsform des anmeldungsgemäßen Verfahrens, das Verfahren ferner umfassen:
- Verschiffen der gebildeten turmförmigen Gründungsstruktur zu einem offshore Installationsort,
- wobei die turmförmige Gründungsstruktur an dem Installationsort rammend oder vibrierend in den Unterwasserboden (insbesondere ein Meeresboden) gegründet wird.

Ein noch weiterer Aspekt der Anmeldung ist eine Verwendung eines aus einem metallischen Material gebildeten Einbindeelements mit einer Länge von zumindest 0,5 m an einer unterseitigen Stirnfläche einer aus einem mineralischen Baustoff gebildeten turmförmigen Gründungsstruktur einer Gründung eines Offshore-Bauwerks, wobei das Einbindeelement eine sich in Längsrichtung erstreckende, umlaufende Einbindewandung umfasst und die Querschnittsform des Einbindeelements der Querschnittsform der Gründungswandung entspricht, insbesondere einer zuvor beschrieben Gründung (z.B. nach Anspruch 1).

Es gibt nun eine Vielzahl von Möglichkeiten, die anmeldungsgemäße Gründunge, das anmeldungsgemäße Offshore-Bauwerk, die anmeldungsgemäße Verwendung und die anmeldungsgemäßen Verfahren auszugestalten und weiterzuentwickeln. Hierzu sei einerseits verwiesen auf die den unabhängigen Ansprüchen nachgeordneten Ansprüche, andererseits auf die Beschreibung von Ausführungsbeispielen in Verbindung mit der Zeichnung. In der Zeichnung zeigt
- Fig. 1: eine schematische Ansicht eines Ausführungsbeispiels eines Offshore-Bauwerks gemäß der vorliegenden Anmeldung mit einem Ausführungsbeispiel einer Gründung gemäß der vorliegenden Anmeldung,
- Fig. 2: eine schematische Schnittansicht eines weiteren Ausführungsbeispiels einer Gründung gemäß der vorliegenden Anmeldung,
- Fig. 3: eine schematische Schnittansicht eines weiteren Ausführungsbeispiels einer Gründung gemäß der vorliegenden Anmeldung,
- Fig. 4: eine schematische Schnittansicht eines weiteren Ausführungsbeispiels einer Gründung gemäß der vorliegenden Anmeldung,
- Fig. 5: eine schematische Schnittansicht eines weiteren Ausführungsbeispiels einer Gründung gemäß der vorliegenden Anmeldung, und
- Fig. 6: ein Diagramm eines Ausführungsbeispiels eines Verfahrens gemäß der vorliegenden Anmeldung.

Nachfolgend werden für gleiche Elemente gleiche Bezugszeichen verwendet. Z bezeichnet hierbei die vertikale Achse und x und y horizontale Achsen. Darüber hinaus beziehen sich in der vorliegenden Anmeldung die Ausdrücke "unten", "unteren" etc. und "oben", "oberen" etc. insbesondere auf die vertikale Achse z und insbesondere auf den Installationszustand der Gründung.

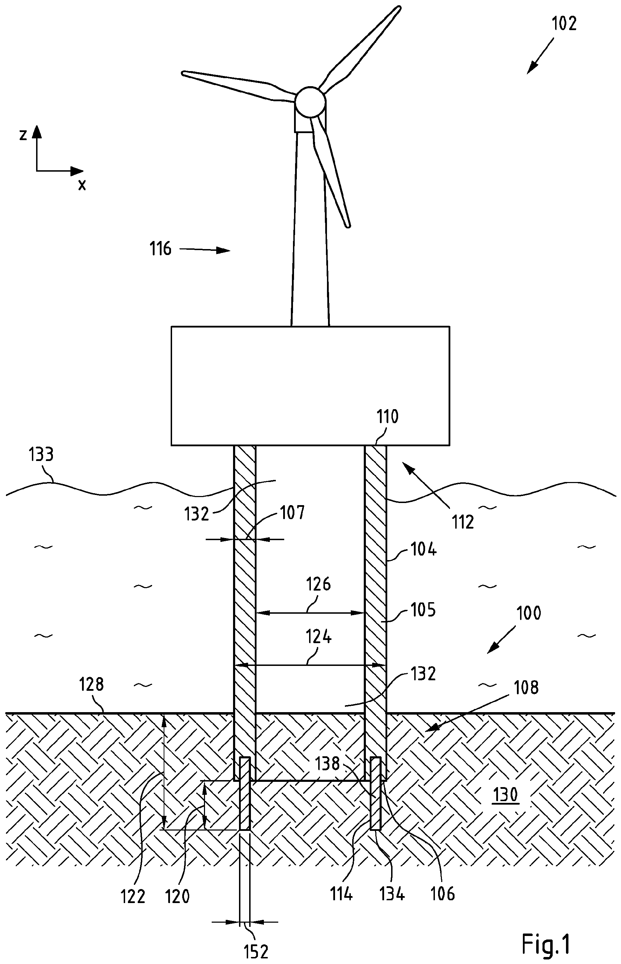

Die Figur 1 zeigt eine schematische Ansicht eines Ausführungsbeispiels eines Offshore-Bauwerks 102 gemäß der vorliegenden Anmeldung mit einem Ausführungsbeispiel einer Gründung 100 gemäß der vorliegenden Anmeldung.

Als Offshore-Bauwerk 102 ist vorliegend beispielhaft ein Offshore-Windkraftbauwerk 102 in Form einer Offshore-Windkraftanlage 102 dargestellt. Vorliegend sind das Offshore-Bauwerk 102 und damit die Gründung 100 in einem Installationszustand dargestellt. Die nachfolgenden Ausführungen lassen sich in einfacher Weise auf andere Offshore-Bauwerke übertragen.

Das Offshore-Bauwerk 102 umfasst mindestens eine Gründung 100 und mindestens eine Offshore-Einrichtung 116 (vorliegend z.B. Turm, Rotor, Generator etc.). Die Gründung 100 umfasst vorliegend eine turmförmige Gründungsstruktur 104. Die turmförmige Gründungsstruktur 104 umfasst eine sich in Längsrichtung (also entlang der Längsachse) erstreckende, umlaufende Gründungswandung 105.

Die Gründungswandung 105 ist am unteren Ende 108 der turmförmigen Gründungsstruktur 104 unterseitig mit einer unterseitigen Stirnfläche 106 begrenzt. Am oberen Ende 112 der turmförmigen Gründungsstruktur 104 ist die Gründungswandung 105 durch eine oberseitige Stirnfläche 110 begrenzt.

Vorzugsweise ist die turmförmige Gründungsstruktur 104 als Hohlstrukturelement 104 gebildet, bevorzugt mit einer kreisförmigen Querschnittsfläche. Insbesondere kann die turmförmige Gründungsstruktur 104 als Hohlpfahl 104 mit einem Innenraum 132 gebildet sein.

Wie bereits beschrieben wurde, zeigt die Figur 1 die Gründung 100 in einem Installationszustand, in dem ein Einbindeende 118 der turmförmigen Gründungstruktur 104 in dem Unterwasserboden 130 bzw. Unterwasserbaugrund 130 (Bezugszeichen 128 bezeichnet die Unterwasserbodenoberfläche) gegründet ist, also in dem Unterwasserboden 130 mit einer Tiefe 122 bzw. Einbindelänge 122 (z.B. zwischen 7 m und 20 m) eingebunden ist. Die turmförmige Gründungsstruktur 104 ragt über die Wasseroberfläche 133 hinaus. Die turmförmige Gründungsstruktur 104 kann mit einem Transition Piece verbunden sein, beispielsweise über eine Groutverbindung, die herkömmlich bekannt ist.

Die Gründungswandung 105 ist vorzugsweise aus Beton hergestellt (wie zuvor beschrieben wurde), insbesondere aus Beton gegossen.

Wie aus der Figur 1 zu erkennen ist, bleibt die Wandstärke 107 bzw. Wanddicke 107 in Längsrichtung (z) über die gesamte Länge der turmförmigen Gründungsstruktur 104 konstant bzw. unverändert. Der Innendurchmesser 126 der turmförmigen Gründungsstruktur 104 bleibt über die gesamte Länge der turmförmigen Gründungsstruktur 104 konstant. Darüber hinaus ist der Außendurchmesser 124 der turmförmigen Gründungsstruktur 104 über die gesamte Länge der turmförmigen Gründungsstruktur 104 konstant.

Bei anderen Varianten der Anmeldung kann sich die Wandstärke der Gründungsstruktur ändern. Beispielsweise kann sich die Wandstärke von der oberseitigen Stirnfläche 110 zur unterseitige Stirnfläche verjüngen, beispielsweise indem sich der Innendurchmesser vergrößert und der Außendurchmesser konstant bleibt oder der Außendurchmesser sich reduziert und der Innendurchmesser konstant bleibt.

Anmeldungsgemäß ist an der unterseitigen Stirnfläche 106 mindestens ein aus einem metallischen Werkstoff bzw. Material (vorzugsweise Stahl) gebildetes Einbindeelement 114 mit einer Länge 120 (gemessen von der unterseitigen Stirnfläche 106 zum unteren Ende 134) von zumindest 0,5 m angeordnet. Das untere Ende 134 meint insbesondere den Punkt der Gründung 100, insbesondere des Einbindeelements 114, welcher am tiefsten (in vertikaler Richtung z) in dem Unterwasserboden in dem Installationszustand der Gründungsstruktur eingebunden ist.

Das Einbindeelement 114 aus Metall, insbesondere Stahl, unterstützt den Installationsvorgang und insbesondere die Verdrängung von Bodenmaterial während des Installationsvorgangs.

Insbesondere kann aufgrund der Metallausführung die Wandstärke 152 einer Einbindewandung 138 des Einbindeelements 114 geringer sein (z.B. weniger als 90 %, vorzugsweise weniger als 70 %, insbesondere bevorzugt weniger als 50 % (und mehr als 10 %) der Wandstärke 107 der Gründungswandung 105) als die Wandstärke 107 der Gründungswandung 105.

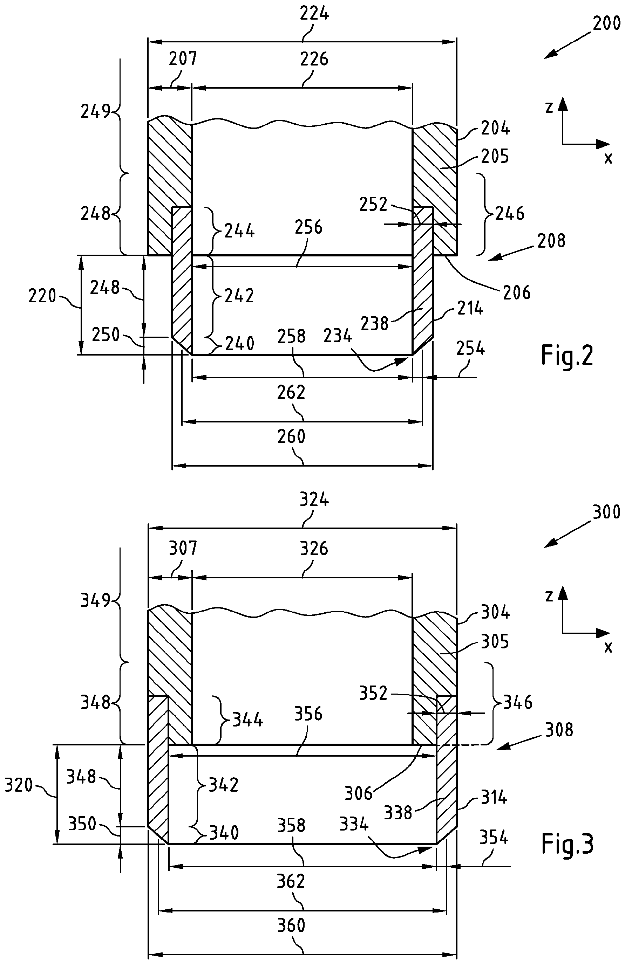

Die Figuren 2 bis 5 zeigen schematische (Schnitt-) Ansichten von verschiedenen Ausführungsformen von Gründungen 200 bis 500 gemäß der vorliegenden Anmeldung, insbesondere mit anderen Formen von Einbindeelementen 214 bis 514. Zur Vermeidung von Wiederholungen werden nachfolgend im Wesentlichen nur die Unterschiede zu dem vorhergehenden Ausführungsbeispiel beschrieben und ansonsten auf die Ausführungen zur Figur 1 verwiesen.

Eine umlaufende Einbindewandung 238 eines metallischen Einbindeelements 214 kann vorzugsweise in einen (ein-) gebundenen Endabschnitt 244, einen freien Endabschnitt 240 und einen den gebundenen Endabschnitt 244 und den freien Endabschnitt 240 verbindenden Verbindungsabschnitt 242 unterteilt werden. Vorzugsweise ist die Einbindewandung 238 einstückig gebildet.

Wie aus der Figur 2 zu erkennen ist, ist der eingebundene Endabschnitt 244 in einem Einbindebereich 248 an unterem Ende 208 der Gründungswandung 205 in das mineralische Material, insbesondere den Beton, eingebunden, insbesondere fest verankert. Vorzugsweise kann eine stirnseitige Bohrung und eine Dübelverankerung verwendet werden, um den gebundenen Endabschnitt in der Gründungswandung zu verankern.

Vorzugsweise kann als mineralischer Baustoff in dem Einbindebereich 248 der turmförmigen Gründungsstruktur 204, in dem vorliegend der eingebundene Endabschnitt 244 in der turmförmigen Gründungsstruktur 204 eingebunden ist, ein mineralischer Baustoff mit einer Druckfestigkeit von über 150 N/mm² und einem w/z-Wert von zumindest kleiner als 0,25 eingesetzt sein.

Anders ausgedrückt, kann in dem Bereich 248, in dem sich der eingebundene Endabschnitt 244 in der Gründungswandung 204 erstreckt, insbesondere ein ultrahochfester Beton (UHFB; auch als Ultra High Performance Concrete bezeichnet) als mineralischer Baustoff verwendet werden, während in dem übrigen Abschnitt 249 ein mineralischer Baustoff mit einer geringeren Festigkeit eingesetzt werden. Hierdurch kann eine ausreichende Festigkeit insbesondere in dem Einbindebereich 248 bzw. Verbindungsbereich zwischen der Gründungswandung 208 und dem Einbindeelement 214 bereitgestellt werden.

Der sich an den eingebundenen Endabschnitt 244 anschließende Verbindungsabschnitt 242 weist insbesondere eine in Längsrichtung (z) konstante Wandstärke 252 auf. Die Wandstärke 252 ist zumindest geringer als die Wandstärke 207 der Gründungswandung 205. Die Länge des Verbindungsabschnitts 242 in Längsrichtung (z) von der unterseitigen Stirnseite 206 zu dem Anfang des freien Endabschnitts 240 kann zwischen 0,2 m und 5,8 m liegen.

In dem dargestellten bevorzugten Ausführungsbeispiel entspricht ein Innendurchmesser 256 des Verbindungsabschnitts 242 im Wesentlichen einem Innendurchmesser 226 der turmförmigen Gründungstruktur 204 (im Bereich der unterseitigen Stirnfläche 210). Dies meint insbesondere, dass, wie in Figur 2 dargestellt, die jeweiligen Innenseiten der Wandungen 205, 238 im Wesentlichen in einer Linie liegen. Der Außendurchmesser 260 des Verbindungsabschnitts 242 ist hierbei geringer als der Außendurchmesser 224 der Gründungswandung 205.

Der freie Endabschnitt 240 weist eine gegenüber der Windstärke 252 geänderte Wandstärke 254 auf, im vorliegenden bevorzugten Ausführungsbeispiel eine sich stetig reduzierende Wandstärke 254. Wie aus der Figur 2 zu erkennen ist, weist der freie Endabschnitt 240 in der x-z Schnittansicht eine dreieckige Querschnittsfläche auf. Anders ausgedrückt, kann der freie Endabschnitt 240 insbesondere ein angespitztes unteres Ende 234 des Einbindeelements 214 bilden.

Ein Innendurchmesser 258 des freien Endabschnitts 240 bleibt in dem dargestellten bevorzugten Ausführungsbeispiel von dem Verbindungsabschnitts 242 zu dem unteren Ende 234 des freien Endabschnitts 240 im Wesentlichen gleich bzw. konstant. Ein Außendurchmesser 262 des freien Endabschnitts 240 (zwischen dem Ende des Verbindungsabschnitts 242 und dem unteren Ende 234 des freien Endabschnitts 240) verjüngt sich insbesondere stetig.

Tests haben gezeigt, dass diese Ausführungsform besonders gut die Verdrängung von Bodenmaterial unterstützt und somit den Installationsvorgang besonders erleichtert. Insbesondere wird die Gefahr einer Verpfropfung, insbesondere bei einem kleinen Durchmesser der turmförmigen Gründungsstruktur, reduziert.

Das Ausführungsbeispiel gemäß der Figur 3 unterscheidet sich von dem Ausführungsbeispiel nach Figur 2 insbesondere darin, dass ein Außendurchmesser 360 des Verbindungsabschnitts 342 im Wesentlichen einem Außendurchmesser 324 der turmförmigen Gründungstruktur 305 (im Bereich der unterseitigen Stirnfläche 310) entspricht.

Dies meint insbesondere, dass, wie in Figur 3 dargestellt, die jeweiligen Außenseiten der Wandungen 305, 338 im Wesentlichen in einer Linie liegen. Der Innendurchmesser 356 des Verbindungsabschnitts 342 ist hierbei geringer als der Außendurchmesser 326 der Gründungswandung 305.

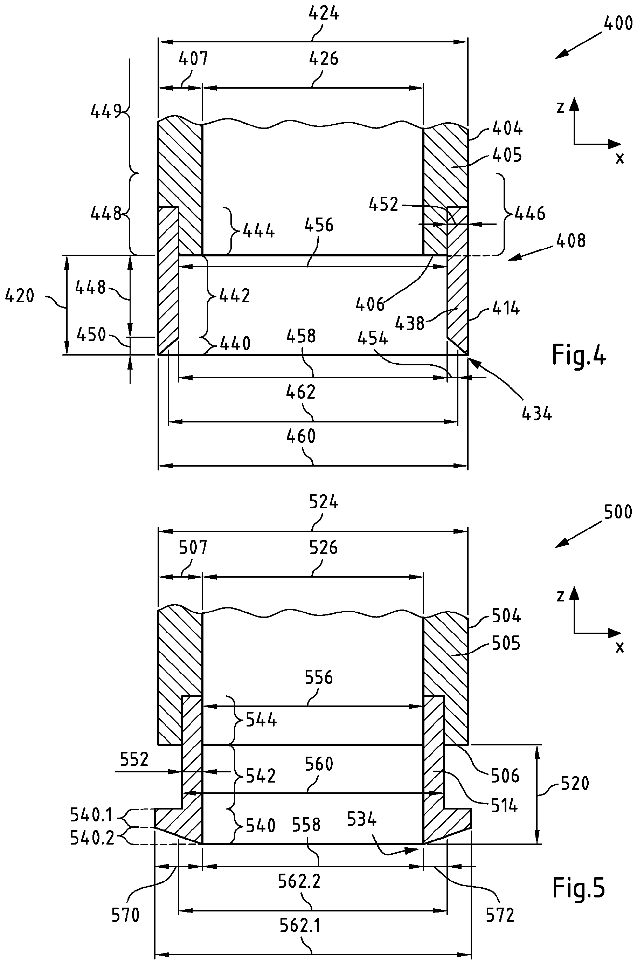

Das Ausführungsbeispiel gemäß der Figur 4 unterscheidet sich von dem Ausführungsbeispiel nach Figur 3 insbesondere darin, dass ein Außendurchmesser 462 des freien Endabschnitts 440 in dem dargestellten Ausführungsbeispiel von dem Verbindungsabschnitt 442 zu dem unteren Ende 434 des freien Endabschnitts 440 im Wesentlichen gleich bzw. konstant bleibt. Ein Innendurchmesser 458 des freien Endabschnitts 440 (zwischen dem Ende des Verbindungsabschnitts 442 und dem unteren Ende 434 des freien Endabschnitts 440) verjüngt sich insbesondere stetig.

Die Figur 5 unterscheidet sich von den Ausführungsbeispielen gemäß den Figuren 2 bis 4 insbesondere darin, dass eine Wandstärke 570 (zumindest im unmittelbaren Anschluss an den Verbindungsabschnitt 542) des freien Endabschnitts 540 größer als die Wandstärke 552 des Verbindungsabschnitts 542 ist. Vorzugsweise kann die Wandstärke 570 des freien Endabschnitts 540 im Wesentlichen der Wandstärke 507 der Gründungswandung 505 entsprechen.

Insbesondere kann der freie Endabschnitt 540 in zwei Subabschnitte 540.1, 540.2 unterteilt sein. Ein erster Subabschnitt 540.1 schließt sich (unmittelbar) an den Verbindungsabschnitt 542 an und weist insbesondere eine konstante bzw. gleichbleibende Wandstärke 570 auf, die insbesondere größer als die Wandstärke 552 des Verbindungsabschnitts 542 ist.

Der zweite Subabschnitt 540.2 schließt sich (unmittelbar) an den ersten Subabschnitt 540.2 an und weist insbesondere eine sich (stetig) reduzierende Wandstärke 572 auf. Der zweite Subabschnitt 540.2 weist insbesondere das untere Ende 534 auf. In der x-z Schnittansicht weist der zweite Subabschnitt 540.2 insbesondere eine dreieckige Querschnittsfläche auf.

Wie ferner aus der Figur 5 zu erkennen ist, entspricht vorzugsweise der Innendurchmesser 526 der Gründungswandung 505 dem Innendurchmesser des Verbindungsabschnitts 542 und insbesondere dem Innendurchmesser 558 des freien Endabschnitts 540.

Ferner ist zu erkennen, dass vorzugsweise der Außendurchmesser 560 des Verbindungsabschnitts 542 (bei gleichbleibender Wandstärke des Verbindungsabschnitts 542) geringer ist als der Außendurchmesser 524 der Gründungswandung 505.

Der Außendurchmesser 562.1 des ersten Subabschnitts 540.1 ist zumindest größer als der Außendurchmesser 560 des Verbindungsabschnitts 542 und kann vorzugsweise im Wesentlichen dem Außendurchmesser 524 der Gründungswandung 505 entsprechen. Der Außendurchmesser 562.2 des zweiten Subabschnitts 540.2 reduziert sich vorzugsweise stetig.

Tests haben gezeigt, dass durch die spezielle Ausgestaltung des Einbindeelements 514 gemäß dem Ausführungsbeispiel nach Figur 5 die Mantelreibung im Bereich der Gründungswandung 505 signifikant reduziert werden kann, und hierdurch insbesondere der Installationsvorgang signifikant erleichtert werden kann.

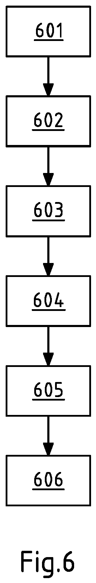

Die Figur 6 zeigt ein Diagramm eines Ausführungsbeispiels eines Verfahrens gemäß der vorliegenden Anmeldung zum Herstellen einer Gründung, insbesondere einer Gründung nach einem der Ausführungsbeispiele nach den Figuren 1 bis 5.

In einem Schritt 601 erfolgt ein on-shore Bereitstellen einer Schalung, wobei ein Ringspalt in der Schalung von einem ersten Ende der Schalung hin zu einem zweiten Ende der Schalung gleichbleibt bzw. konstant ist. Der Ringspalt ist radial umlaufend und erstreckt sich in axialer Richtung bzw. in Längsrichtung über die gesamte Schalung.

In einem Schritt 602 erfolgt ein Vergießen der Schalung mit einem flüssigen Beton.

Anschließend erfolgt in Schritt 603 ein Aushärten des flüssigen Betons, derart, dass der ausgehärtete Beton eine turmförmige Gründungsstruktur bildet.

Beispielsweise werden die turmförmigen Gründungsstrukturen in Slipform- und Jumpform-Verfahren aus Beton gegossen und aufrecht stehend getrocknet.

In Schritt 604 erfolgt ein Befestigen eines aus einem metallischen Material gebildeten Einbindeelements an der unterseitigen Stirnseite der ausgehärteten turmförmigen Gründungsstruktur. Bei einer Variante der Anmeldung kann ein Einsetzen eines eingebundenen Endabschnitts eines aus einem metallischen Material gebildeten Einbindeelements in den Ringspalt am unteren Ende erfolgen, das insbesondere die unterseitige Stirnfläche umfassen kann.

Optional kann in Schritt 605 ein Verschiffen der gebildeten turmförmigen Gründungsstruktur zu einem offshore Installationsort erfolgen. Insbesondere kann nach dem Aushärten eine gebildete turmförmige Gründungsstruktur einmal um 180° gedreht und auf ein Schiff 26 verladen.

In Schritt 606 kann optional die turmförmige Gründungsstruktur an dem Installationsort rammend oder vibrierend in den Meeresboden gegründet werden. Insbesondere können turmförmige Gründungsstrukturen aufrecht stehend auf einem Schiff zu einem Installationsort verschifft und dort mit einem geeigneten Gründungswerkzeug gegründet werden. Die turmförmigen Gründungsstrukturen können auf dem Schiff bereits so gelagert werden, dass die untere Stirnfläche unten ist und die obere Stirnfläche oben ist, sodass beim Gründen die untere Stirnfläche auf den Unterwasserboden aufgesetzt wird und mittels des Gründungswerkzeugs die turmförmige Gründungsstruktur in den Unterwasserboden gerammt oder einvibriert wird.

## Patentansprüche

1. Gründung (100, 200, 300, 400, 500) für ein Offshore-Bauwerk (102), insbesondere ein Offshore-Windkraftbauwerk (102), umfassend:
- mindestens eine turmförmige Gründungstruktur (104, 204, 304, 404, 504) mit einer sich in Längsrichtung erstreckenden, umlaufenden Gründungswandung (105, 205, 305, 405, 505), wobei die Gründungswandung (105, 205, 305, 405, 505) unterseitig mit einer unterseitigen Stirnfläche (106, 206, 306, 406, 506) begrenzt ist,
- wobei die Gründungswandung (105, 205, 305, 405, 505) aus einem mineralischen Baustoff gebildet ist, wobei die Gründung (100, 200, 300, 400, 500) umfasst:
- mindestens ein aus einem metallischen Material gebildetes und an der unterseitigen Stirnfläche (106, 206, 306, 406, 506) angeordnetes Einbindeelement (114, 214, 314, 414, 514), **dadurch gekennzeichnet, dass**
- die Länge des Einbindeelements (114, 214, 314, 414, 514) von der unterseitigen Stirnfläche (106, 206, 306, 406, 506) bis zu einem unteren Ende (134, 234, 334, 434, 534) des Einbindeelements (114, 214, 314, 414, 514) zumindest 0,5 m beträgt,
- wobei das Einbindeelement (114, 214, 314, 414, 514) eine sich in Längsrichtung erstreckende, umlaufende Einbindewandung (138, 238, 338, 438, 538) umfasst und die Querschnittsform des Einbindeelements (114, 214, 314, 414, 514) der Querschnittsform der Gründungswandung entspricht.

2. Gründung (100, 200, 300, 400, 500) nach Anspruch 1, **dadurch gekennzeichnet, dass**
- die Länge des Einbindeelements (114, 214, 314, 414, 514) von der unterseitigen Stirnfläche (106, 206, 306, 406, 506) bis zu einem unteren Ende (134, 234, 334, 434, 534) des Einbindeelements (114, 214, 314, 414, 514) zwischen 1 m und 9 m liegt.

3. Gründung (100, 200, 300, 400, 500) nach Anspruch 1 oder 2, **dadurch gekennzeichnet, dass**
- die Gründungswandung (105, 205, 305, 405, 505) oberseitig mit einer oberseitigen Stirnfläche (110) begrenzt ist, und
- eine Wandstärke der Gründungswandung (105, 205, 305, 405, 505) von der oberseitigen Stirnfläche (110) hin zu der unterseitigen Stirnfläche (106, 206, 306, 406, 506) im Wesentlichen im Wesentlichen gleichbleibend ist.

4. Gründung (100, 200, 300, 400, 500) nach einem der vorherigen Ansprüche, **dadurch gekennzeichnet, dass**
- eine Wandstärke der Gründungswandung (105, 205, 305, 405, 505) zumindest größer ist als eine Wandstärke der Einbindewandung (138, 238, 338, 438, 538).

5. Gründung (100, 200, 300, 400, 500) nach einem der vorherigen Ansprüche, **dadurch gekennzeichnet, dass**
- die Wandstärke der Gründungswandung (105, 205, 305, 405, 505) zwischen 150 mm und 400 mm liegt, und
- die Wandstärke der Einbindewandung (138, 238, 338, 438, 538) zwischen 10 mm und 100 mm liegt, vorzugsweise zwischen 30 mm und 80 mm.

6. Gründung (100, 200, 300, 400, 500) nach einem der vorherigen Ansprüche, **dadurch gekennzeichnet, dass**
- die Einbindewandung (138, 238, 338, 438, 538) einen freien Endabschnitt (240, 340, 440, 540), einen gebundenen Endabschnitt (244, 344, 444, 544) und einen den freien Endabschnitt (240, 340, 440, 540) mit dem gebundenen Endabschnitt (244, 344, 444, 544) verbindenden Verbindungsabschnitt (242, 342, 442, 542) umfasst,
- wobei der gebundene Endabschnitt (244, 344, 444, 544) in der Gründungswandung (105, 205, 305, 405, 505) eingebunden ist.

7. Gründung (100, 200, 300, 400, 500) nach Anspruch 6, **dadurch gekennzeichnet, dass**
- eine Wandstärke des Verbindungsabschnitts (242, 342, 442, 542) von dem gebundenen Endabschnitt (244, 344, 444, 544) zu dem freien Endabschnitt (240, 340, 440, 540) gleichbleibend ist.

8. Gründung (100, 200, 300, 400, 500) nach Anspruch 6 oder 7, **dadurch gekennzeichnet, dass**
- eine Wandstärke des freien Endabschnitts (240, 340, 440, 540) sich von einer Wandstärke des Verbindungsabschnitts (242, 342, 442, 542) unterscheidet, wobei
- sich die Wandstärke des freien Endabschnitts (240, 340, 440, 540) von dem Verbindungsabschnitt (242, 342, 442, 542) zu dem unteren Ende (134, 234, 334, 434, 534) des freien Endabschnitts (240, 340, 440, 540) insbesondere verjüngt, oder
- eine Wandstärke des freien Endabschnitts (240, 340, 440, 540) insbesondere größer ist als die Wandstärke des Verbindungsabschnitts (242, 342, 442, 542).

9. Gründung (100, 200, 300, 400, 500) nach einem der Ansprüche 6 bis 8, **dadurch gekennzeichnet, dass**
- ein Innendurchmesser des Verbindungsabschnitts (242, 342, 442, 542) im Wesentlichen einem Innendurchmesser der turmförmigen Gründungstruktur (104, 204, 304, 404, 504) entspricht,
oder
- ein Außendurchmesser des Verbindungsabschnitts (242, 342, 442, 542) im Wesentlichen einem Außendurchmesser der turmförmigen Gründungstruktur (104, 204, 304, 404, 504) entspricht.

10. Gründung (100, 200, 300, 400, 500) nach einem der vorherigen Ansprüche 6 bis 9, **dadurch gekennzeichnet, dass**
- ein Innendurchmesser des freien Endabschnitts (240, 340, 440, 540) von dem Verbindungsabschnitt (242, 342, 442, 542) zu dem unteren Ende (134, 234, 334, 434, 534) des freien Endabschnitts (240, 340, 440, 540) im Wesentlichen gleichbleibend ist, und
- sich ein Außendurchmesser des freien Endabschnitts (240, 340, 440, 540) von dem Verbindungsabschnitt (242, 342, 442, 542) zu dem unteren Ende (134, 234, 334, 434, 534) des freien Endabschnitts (240, 340, 440, 540) verjüngt,
oder
- ein Außendurchmesser des freien Endabschnitts (240, 340, 440, 540) von dem Verbindungsabschnitt (242, 342, 442, 542) zu dem unteren Ende (134, 234, 334, 434, 534) des freien Endabschnitts (240, 340, 440, 540) im Wesentlichen gleichbleibend ist, und
- sich ein Innendurchmesser des freien Endabschnitts (240, 340, 440, 540) von dem Verbindungsabschnitt (242, 342, 442, 542) zu dem unteren Ende (134, 234, 334, 434, 534) des freien Endabschnitts (240, 340, 440, 540) verjüngt.

11. Gründung (100, 200, 300, 400, 500) nach einem der vorherigen Ansprüche, **dadurch gekennzeichnet, dass**
- als mineralischer Baustoff in einem Einbindebereich (248) der turmförmigen Gründungsstruktur (104, 204, 304, 404, 504), in dem ein Ende des Einbindeelements (114, 214, 314, 414, 514) in der turmförmigen Gründungsstruktur (104, 204, 304, 404, 504) eingebunden ist, ein mineralischer Baustoff mit einer Druckfestigkeit von über 150 N/mm² und einem w/z-Wert < 0,25 eingesetzt ist.

12. Offshore-Bauwerk (102), insbesondere Offshore-Windkraftbauwerk (102), umfassend
- mindestens eine Gründung (100, 200, 300, 400, 500) nach einem der vorherigen Ansprüche, und
- mindestens eine durch die Gründung (100, 200, 300, 400, 500) getragene Offshore-Einrichtung (116).

13. Verfahren zur Herstellung einer Gründung (100, 200, 300, 400, 500) nach einem der vorhergehenden Ansprüche, umfassend:
- on-shore Bereitstellen einer Schalung, wobei ein Ringspalt in der Schalung von einem ersten, oberen Ende hin zu einem zweiten, unteren Ende insbesondere gleichbleibt,
- Vergießen der Schalung mit einem flüssigen Beton, und
- Aushärten des Betons, derart, dass der ausgehärtete Beton eine turmförmige Gründungsstruktur (104, 204, 304, 404, 504) bildet,
- Befestigen eines aus einem metallischen Material gebildeten Einbindeelements (114, 214, 314, 414, 514) an der unterseitigen Stirnseite (106, 206, 306, 406, 506) der ausgehärteten turmförmigen Gründungsstruktur (104, 204, 304, 404, 504).

14. Verwendung eines aus einem metallischen Material gebildeten Einbindeelements (114, 214, 314, 414, 514) mit einer Länge von zumindest 0,5 m an der unterseitigen Stirnfläche (106, 206, 306, 406, 506) einer aus einem mineralischen Baustoff gebildeten turmförmigen Gründungsstruktur (104, 204, 304, 404, 504) einer Gründung (100, 200, 300, 400, 500) eines Offshore-Bauwerks (102), wobei das Einbindeelement (114, 214, 314, 414, 514) eine sich in Längsrichtung erstreckende, umlaufende Einbindewandung (138, 238, 338, 438, 538) umfasst und die Querschnittsform des Einbindeelements (114, 214, 314, 414, 514) der Querschnittsform der Gründungswandung entspricht.

## Claims

1. foundation (100, 200, 300, 400, 500) for an offshore structure (102), in particular an offshore wind power structure (102), comprising:
- at least one tower-shaped foundation structure (104, 204, 304, 404, 504) with a circumferential foundation wall (105, 205, 305, 405, 505) extending in the longitudinal direction, the foundation wall (105, 205, 305, 405, 505) being bounded on the underside by an underside end face (106, 206, 306, 406, 506),
- wherein the foundation wall (105, 205, 305, 405, 505) is formed from a mineral building material,
- wherein the foundation (100, 200, 300, 400, 500) comprises
- at least one binding element (114, 214, 314, 414, 514) formed of a metallic material and arranged on the underside end face (106, 206, 306, 406, 506), **characterized in that**
- the length of the binding element (114, 214, 314, 414, 514) from the underside end face (106, 206, 306, 406, 506) to a lower end (134, 234, 334, 434, 534) of the binding element (114, 214, 314, 414, 514) is at least 0.5 m,
- wherein the tie-in member (114, 214, 314, 414, 514) comprises a longitudinally extending circumferential tie-in wall (138, 238, 338, 438, 538) and the cross-sectional shape of the tie-in member (114, 214, 314, 414, 514) corresponds to the cross-sectional shape of the foundation wall.

2. Foundation (100, 200, 300, 400, 500) according to claim 1, **characterized in that**
- the length of the embedment element (114, 214, 314, 414, 514) from the underside end face (106, 206, 306, 406, 506) to a lower end (134, 234, 334, 434, 534) of the embedment element (114, 214, 314, 414, 514) is between 1 m and 9 m.

3. foundation (100, 200, 300, 400, 500) according to claim 1 or 2, **characterized in that**
- the foundation wall (105, 205, 305, 405, 505) is bounded at the top by a top end face (110), and
- a wall thickness of the foundation wall (105, 205, 305, 405, 505) is substantially constant from the top end face (110) to the bottom end face (106, 206, 306, 406, 506).

4. Foundation (100, 200, 300, 400, 500) according to any one of the preceding claims **characterized in that** - a wall thickness of the foundation wall (105, 205, 305, 405, 505) is at least greater than a wall thickness of the tie-in wall (138, 238, 338, 438, 538).

5. foundation (100, 200, 300, 400, 500) according to any one of the preceding claims, **characterized in that**
- the wall thickness of the foundation wall (105, 205, 305, 405, 505) is between 150 mm and 400 mm, and
- the wall thickness of the tie-in wall (138, 238, 338, 438, 538) is between 10 mm and 100 mm, preferably between 30 mm and 80 mm.

6. A foundation (100, 200, 300, 400, 500) according to any one of the preceding claims, **characterized in that** - said embedment wall (138, 238, 338, 438, 538) comprises a free end portion (240, 340, 440, 540), a bound end portion (244, 344, 444, 544) and a connecting portion (242, 342, 442, 542) connecting said free end portion (240, 340, 440, 540) to said bound end portion (244, 344, 444, 544),
- wherein the bonded end portion (244, 344, 444, 544) is incorporated in the foundation wall (105, 205, 305, 405, 505).

7. foundation (100, 200, 300, 400, 500) according to claim 6, **characterized in that**
- a wall thickness of the connecting portion (242, 342, 442, 542) is constant from the bound end portion (244, 344, 444, 544) to the free end portion (240, 340, 440, 540).

8. foundation (100, 200, 300, 400, 500) according to claim 6 or 7, **characterized in that**
- a wall thickness of the free end portion (240, 340, 440, 540) is different from a wall thickness of the connecting portion (242, 342, 442, 542), wherein
- the wall thickness of the free end portion (240, 340, 440, 540) tapers from the connecting portion (242, 342, 442, 542) to the lower end (134, 234, 334, 434, 534) of the free end portion (240, 340, 440, 540) in particular, or
- a wall thickness of the free end portion (240, 340, 440, 540) is in particular greater than the wall thickness of the connecting portion (242, 342, 442, 542).

9. A foundation (100, 200, 300, 400, 500) according to any one of claims 6 to 8, **characterized in that** - an inner diameter of the connecting portion (242, 342, 442, 542) substantially corresponds to an inner diameter of the tower-shaped foundation structure (104, 204, 304, 404, 504),
or
- an outer diameter of the connecting portion (242, 342, 442, 542) substantially corresponds to an outer diameter of the tower-shaped foundation structure (104, 204, 304, 404, 504).

10. foundation (100, 200, 300, 400, 500) according to any one of the preceding claims 6 to 9, **characterized in that**
- an inner diameter of the free end portion (240, 340, 440, 540) from the connecting portion (242, 342, 442, 542) to the lower end (134, 234, 334, 434, 534) of the free end portion (240, 340, 440, 540) is substantially constant, and
- an outer diameter of the free end portion (240, 340, 440, 540) tapers from the connecting portion (242, 342, 442, 542) to the lower end (134, 234, 334, 434, 534) of the free end portion (240, 340, 440, 540),
or
- an outer diameter of the free end portion (240, 340, 440, 540) is substantially constant from the connecting portion (242, 342, 442, 542) to the lower end (134, 234, 334, 434, 534) of the free end portion (240, 340, 440, 540), and
- an inner diameter of the free end portion (240, 340, 440, 540) tapers from the connecting portion (242, 342, 442, 542) to the lower end (134, 234, 334, 434, 534) of the free end portion (240, 340, 440, 540).

11. foundation (100, 200, 300, 400, 500) according to one of the previous claims, **characterized in that**
- a mineral building material having a compressive strength of more than 150 N/mm² and a w/c ratio < 0.25 is used as the mineral building material in a bonding region (248) of the tower-shaped foundation structure (104, 204, 304, 404, 504) in which one end of the bonding element (114, 214, 314, 414, 514) is bonded in the tower-shaped foundation structure (104, 204, 304, 404, 504).

12. offshore structure (102), in particular offshore wind power structure (102), comprising
- at least one foundation (100, 200, 300, 400, 500) according to any one of the preceding claims, and
- at least one offshore device (116) supported by the foundation (100, 200, 300, 400, 500).

13. method for producing a foundation (100, 200, 300, 400, 500) according to one of the preceding claims, comprising:
- providing on-shore a formwork, wherein an annular gap in the formwork from a first, upper end towards a second, lower end in particular remains the same,
- casting the formwork with a liquid concrete, and
- curing the concrete such that the cured concrete forms a tower-shaped foundation structure (104, 204, 304, 404, 504),
- securing a binding element (114, 214, 314, 414, 514) formed of a metallic material to the underside end face (106, 206, 306, 406, 506) of the cured tower-shaped foundation structure (104, 204, 304, 404, 504).

14. Use of a binding element (114, 214, 314, 414, 514) formed from a metallic material and having a length of at least 0.5 m on the underside end face (106, 206, 306, 406, 506) of a tower-shaped foundation structure (104, 204, 304, 404, 504) formed from a mineral building material of a foundation (100, 200, 300, 400, 500) of an offshore structure (102), wherein the embedment member (114, 214, 314, 414, 514) comprises a longitudinally extending circumferential embedment wall (138, 238, 338, 438, 538) and the cross-sectional shape of the embedment member (114, 214, 314, 414, 514) corresponds to the cross-sectional shape of the foundation wall.

## Revendications

1. Fondation (100, 200, 300, 400, 500) pour une structure en mer (102), en particulier une structure éolienne en mer (102), comprenant :
- au moins une structure de fondation en forme de tour (104, 204, 304, 404, 504) dotée d'une paroi de fondation circonférentielle (105, 205, 305, 405, 505) s'étendant dans la direction longitudinale, la paroi de fondation (105, 205, 305, 405, 505) étant délimitée sur le côté inférieur par une face d'extrémité inférieure (106, 206, 306, 406, 506),
- dans laquelle la paroi de fondation (105, 205, 305, 405, 505) est formée d'un matériau de construction minéral,
- dans laquelle la fondation (100, 200, 300, 400, 500) comprend
- au moins un élément de liaison (114, 214, 314, 414, 514) formé d'un matériau métallique et disposé sur la face d'extrémité inférieure (106, 206, 306, 406, 506), **caractérisé en ce que**
- la longueur de l'élément de liaison (114, 214, 314, 414, 514) depuis la face d'extrémité inférieure (106, 206, 306, 406, 506) jusqu'à une extrémité inférieure (134, 234, 334, 434, 534) de l'élément de liaison (114, 214, 314, 414, 514) est d'au moins 0,5 m,
- dans laquelle l'élément de liaison (114, 214, 314, 414, 514) comprend une paroi de liaison circonférentielle s'étendant de manière longitudinale (138, 238, 338, 438, 538) et la forme de section transversale de l'élément de liaison (114, 214, 314, 414, 514) correspond à la forme de section transversale de la paroi de fondation.

2. Fondation (100, 200, 300, 400, 500) selon la revendication 1, **caractérisée en ce que**
- la longueur de l'élément de liaison (114, 214, 314, 414, 514) depuis la face d'extrémité inférieure (106, 206, 306, 406, 506) jusqu'à une extrémité inférieure (134, 234, 334, 434, 534) de l'élément de liaison (114, 214, 314, 414, 514) est comprise entre 1 m et 9 m.

3. Fondation (100, 200, 300, 400, 500) selon la revendication 1 ou 2, **caractérisée en ce que**
- la paroi de fondation (105, 205, 305, 405, 505) est délimitée au sommet par une face d'extrémité supérieure (110), et
- une épaisseur de paroi de la paroi de fondation (105, 205, 305, 405, 505) est sensiblement constante depuis la face d'extrémité supérieure (110) jusqu'à la face d'extrémité inférieure (106, 206, 306, 406, 506).

4. Fondation (100, 200, 300, 400, 500) selon l'une quelconque des revendications précédentes, **caractérisée en ce que**
- une épaisseur de paroi de la paroi de fondation (105, 205, 305, 405, 505) est au moins supérieure à une épaisseur de paroi de la paroi de liaison (138, 238, 338, 438, 538).

5. Fondation (100, 200, 300, 400, 500) selon l'une quelconque des revendications précédentes, **caractérisée en ce que**
- l'épaisseur de paroi de la paroi de fondation (105, 205, 305, 405, 505) est comprise entre 150 mm et 400 mm, et
- l'épaisseur de paroi de la paroi de liaison (138, 238, 338, 438, 538) est comprise entre 10 mm et 100 mm, de préférence entre 30 mm et 80 mm.

6. Fondation (100, 200, 300, 400, 500) selon l'une quelconque des revendications précédentes, **caractérisée en ce que**
- ladite paroi de liaison (138, 238, 338, 438, 538) comprend une partie d'extrémité libre (240, 340, 440, 540), une partie d'extrémité liée (244, 344, 444, 544) et une partie de liaison (242, 342, 442, 542) reliant ladite partie d'extrémité libre (240, 340, 440, 540) à ladite partie d'extrémité liée (244, 344, 444, 544),
- dans laquelle la partie d'extrémité liée (244, 344, 444, 544) est incorporée dans la paroi de fondation (105, 205, 305, 405, 505).

7. Fondation (100, 200, 300, 400, 500) selon la revendication 6, **caractérisée en ce que**
- une épaisseur de paroi de la partie de liaison (242, 342, 442, 542) est constante depuis la partie d'extrémité liée (244, 344, 444, 544) jusqu'à la partie d'extrémité libre (240, 340, 440, 540).

8. Fondation (100, 200, 300, 400, 500) selon la revendication 6 ou 7, **caractérisée en ce que**
- une épaisseur de paroi de la partie d'extrémité libre (240, 340, 440, 540) est différente d'une épaisseur de paroi de la partie de liaison (242, 342, 442, 542), dans laquelle
- l'épaisseur de paroi de la partie d'extrémité libre (240, 340, 440, 540) se rétrécit depuis la partie de liaison (242, 342, 442, 542) jusqu'à l'extrémité inférieure (134, 234, 334, 434, 534) de la partie d'extrémité libre (240, 340, 440, 540) en particulier, ou
- une épaisseur de paroi de la partie d'extrémité libre (240, 340, 440, 540) est notamment supérieure à l'épaisseur de paroi de la partie de liaison (242, 342, 442, 542).

9. Fondation (100, 200, 300, 400, 500) selon l'une quelconque des revendications 6 à 8, **caractérisée en ce que**
- un diamètre intérieur de la partie de liaison (242, 342, 442, 542) correspond sensiblement à un diamètre intérieur de la structure de fondation en forme de tour (104, 204, 304, 404, 504),
ou
- un diamètre extérieur de la partie de liaison (242, 342, 442, 542) correspond sensiblement à un diamètre extérieur de la structure de fondation en forme de tour (104, 204, 304, 404, 504).

10. Fondation (100, 200, 300, 400, 500) selon l'une quelconque des revendications précédentes 6 à 9, **caractérisée en ce que**
- un diamètre intérieur de la partie d'extrémité libre (240, 340, 440, 540) depuis la partie de liaison (242, 342, 442, 542) jusqu'à l'extrémité inférieure (134, 234, 334, 434, 534) de la partie d'extrémité libre (240, 340, 440, 540) est sensiblement constant, et
- un diamètre extérieur de la partie d'extrémité libre (240, 340, 440, 540) se rétrécit depuis la partie de liaison (242, 342, 442, 542) jusqu'à l'extrémité inférieure (134, 234, 334, 434, 534) de la partie d'extrémité libre (240, 340, 440, 540),
ou
- un diamètre extérieur de la partie d'extrémité libre (240, 340, 440, 540) est sensiblement constant depuis la partie de liaison (242, 342, 442, 542) jusqu'à l'extrémité inférieure (134, 234, 334, 434, 534) de la partie d'extrémité libre (240, 340, 440, 540), et
- un diamètre intérieur de la partie d'extrémité libre (240, 340, 440, 540) se rétrécit depuis la partie de liaison (242, 342, 442, 542) jusqu'à l'extrémité inférieure (134, 234, 334, 434, 534) de la partie d'extrémité libre (240, 340, 440, 540).

11. Fondation (100, 200, 300, 400, 500) selon l'une des revendications précédentes, **caractérisée en ce que**
- un matériau de construction minéral ayant une résistance à la compression supérieure à 150 N/mm² et un rapport E/C < 0,25 est utilisé comme matériau de construction minéral dans une zone de liaison (248) de la structure de fondation en forme de tour (104, 204, 304, 404, 504) dans laquelle une extrémité de l'élément de liaison (114, 214, 314, 414, 514) est liée dans la structure de fondation en forme de tour (104, 204, 304, 404, 504).

12. Structure en mer (102), en particulier une structure éolienne en mer (102), comprenant
- au moins une fondation (100, 200, 300, 400, 500) selon l'une quelconque des revendications précédentes, et
- au moins un dispositif en mer (116) soutenu par la fondation (100, 200, 300, 400, 500).

13. Procédé de fabrication d'une fondation (100, 200, 300, 400, 500) selon l'une des revendications précédentes, consistant à:
- fournir un coffrage à terre, dans lequel un espace annulaire dans le coffrage depuis une première extrémité supérieure jusqu'à une deuxième extrémité inférieure en particulier reste le même,
- couler le coffrage avec un béton liquide, et
- sécher le béton de manière à ce que le béton séché forme une structure de fondation en forme de tour (104, 204, 304, 404, 504),
- fixer un élément de liaison (114, 214, 314, 414, 514) formé d'un matériau métallique au niveau de la face d'extrémité inférieure (106, 206, 306, 406, 506) de la structure de fondation en forme de tour séchée (104, 204, 304, 404, 504).

14. L'utilisation d'un élément de liaison (114, 214, 314, 414, 514) formé d'un matériau métallique et ayant une longueur d'au moins 0,5 m sur la face d'extrémité inférieure (106, 206, 306, 406, 506) d'une structure de fondation en forme de tour (104, 204, 304, 404, 504) formée d'un matériau de construction minéral d'une fondation (100, 200, 300, 400, 500) d'une structure en mer (102), dans laquelle l'élément de liaison (114, 214, 314, 414, 514) comprend une paroi de liaison circonférentielle s'étendant de manière longitudinale (138, 238, 338, 438, 538) et la forme de section transversale de l'élément de liaison (114, 214, 314, 414, 514) correspond à la forme de section transversale de la paroi de fondation.
